# EUROPEAN PATENT APPLICATION

(11) **EP 2 048 417 A1**
(43) Date of publication of application: **15.04.2009**
(21) Application number: 07478002.4
(22) Date of filing: 09.10.2007
(51) Int. Cl.: F16K 5/06, F16K 27/06

(54) **Regulating device for pipeline armature**

(71) Applicant: Iliankov, Yurii, Minsk, 220050 (BY); Kazhemski, Siarhei, Minsk, 220024 (BY)
(72) Inventor: Iliankov, Yurii, Minsk, 220050 (BY); Kazhemski, Siarhei, Minsk, 220024 (BY)
(74) Representative: Sterlina, Tatjana

(57) **Abstract**

The invention relates to the field of armature construction and can be used in the production of valves and locks for water supply engineering, natural gas industry, chemical industry and in other fields of industry for water supply, natural gas, chemical and other industry spheres.

The locking/regulating apparatus of the regulating element and the saddle are made of stone casting. This allows to prolong the term of life and to improve reliability and resistance of the locking/regulating apparatus.

The use of natural raw materials or byproducts of the extracting and processing industry considerably reduces the cost of locking and regulating armature.

## Description

The present invention refers to the field of armature constructions and can be used in the production of shutoff and control valves and valves for water supply engineering, natural gas industry, chemical industry and in other fields of industry.

In the art there are known faucets with movable closing /regulating elements (valves, taps, shibers, cylindrical and spherical corks with openings, etc) sliding over the saddle surface. Spherical type regulating elements (RU Nº2192574) are more often used in these latter days. All the mentioned constructions have a standard set of details: a case with input and output openings, a spherical lock positioned in it, packer and sealing units. The working mode of the lock is changed by operating a control device, which is generally a rod or a shaft.

The main problem with the valves operating in aggressive environments and/ or environments with high content of abrasive particles and/or in the terms of constant opening- closing is that they soon come out of action because of the corrosion of the spherical lock and thickening elements.

Patents DE 19800894, IPC F 16 K 5/06, 13.01.1998; DE 19801042, IPC F 16 K 5/06, 14.01.1998 describe spherical valves wherein based rings and the spherical locking element are made as mineral cast parts, consisting of reactive resin acting as the binding substance and of 60-90% wear resistant ceramic powder filler.

These valves are considered to be cheaper, but they suffer chemical corrosion of the binding substance.

A valve with a ceramic coating on the spherical lock made of aluminum based alloy is described in RU 2104434, IPC F 16 K 5/06, 21.03.1996. The main disadvantages of the spherical valve are fragility of the ceramic surface and cracking thereof because of the different factors of thermal expansion of the ceramic coating and of the aluminum base of locking element.

The closest art for the asserted solution are the valve with ceramic ring plates and a spherical lock of sintered corundum (DE 3803414) as well as the spherical valve (RU 2113645, MPK F 16 K 5/06 published 1998.06.20) with the lock made of porcelain.

These valves are deprived of the aforementioned disadvantages, however they are constructively complex and expensive in production; they easily come out of operation from occasional hits due to fragility of the material of the locking elements.

The second disadvantage of the valve with ceramic locking element is the result of the ceramic process technology. Ceramic materials may differ in raw materials, in their contents, in their structure, and in characteristics of materials. The only common characteristic is the technology: composing of furnace, forming and burning (Dictionary-directory on powdery metallurgy. Kiev: Navukova Dumka, 1982, page 84).

Ceramics is burned at the temperature more than 800°C, which temperature leads to caking of ceramic powder, but, it doesn't result in solid material and therefore it can lead to cracking and crumbling of ceramic particles during further regulation and operation. This reduces the wear-resisting properties of such type of armature.

The main aim of the invention is to prolong the life period and to improve the quality of the locking-regulating armature by increasing the wear and corrosion resisting properties of the working surfaces and of the device as a whole.

One more aim of the invention is to reduce the cost of the device.

The subject-matter of the invention is the regulating element comprising a body with input and output sections, a saddle, and a regulating element with mating surfaces for overlapping the input section, the regulating element being capable of moving along the mating surfaces by means of a rod, which is made of stone casting.

The invention is directed to the improvement of the device. The regulating device of the pipeline armature comprises a body with the input and output sections, a saddle, a regulating element with a drive and mating surfaces for overlapping the passage section; said regulating device is characterized by that the saddle and the regulating element are made of stone casting.

Further improvement of the regulating element consists in that basalt casting is used as stone casting.

Stone casting (basalt casting, slag casting, petrugy) is casting of melting basalts, diabaze and other earth materials, as well as metallurgy slags for producing shaped castings. Generally, stone casting is used for producing tubes, acid proof apparatus, electrotechnical isolators, finish tile. Nevertheless, the use of stone casting in manufacturing lock regulating armature is not known in the art.

Stone casting is ranged among those few materials, which combine in itself a full complex of positive operational characteristics.

Microhardness of stone casting items is 5-8 times higher than in steel and cast-iron. This ensures stable operation under the terms of abrasive amortization.

High chemical resistance and absolute hygroscopicity allows to use stone casting for the protection of equipment against the effect of aggressive mediums, such as liquids, vapors, acids, alkalis.

The fifty times smaller heat conductivity and lower friction index of stone casting as compared with metals, considerably improves the operating characteristics of devices, especially in winter conditions, and several times reduces the level of freezing transported materials on the walls of pipelines, gutters, trays etc.

Stone casting has a low impact toughness and therefore it operates more effectively during the transportation of the materials with the core size up to 50-89 mm and with the speed up to 10 m/sec.

The safety in using the equipment with stone casting is achieved due to the compression forces provided during operation and due to the reduction of the stretching and bending forces to minimal values (because the ultimate compressive strength is 5-10 times higher than the ultimate tensile strength and the ultimate bending strength).

The long period operation experience of stone casting articles shows that the life time of the equipment protected by the stone casting increases by 2-8 times. About 2-5 tons of metal is saved per each ton of stone casting article and furthermore the volume of the repair work is considerably reduced.

**Physical and mechanical characteristics of stone casting**

| Title | Unit of measurement | Value |
|---|---|---|
| Unit weight | Kg/M.³ | 2900 - 3000 |
| Water absorption | % | 0,13 |
| Ultimate bending strength | MPa | 20 - 50 |
| Thermal resistance | °C | 200 - 925 |
| Wearability factor | kg/M.². | 0,47 - 0,80 |
| Acid stability | % | 90 |

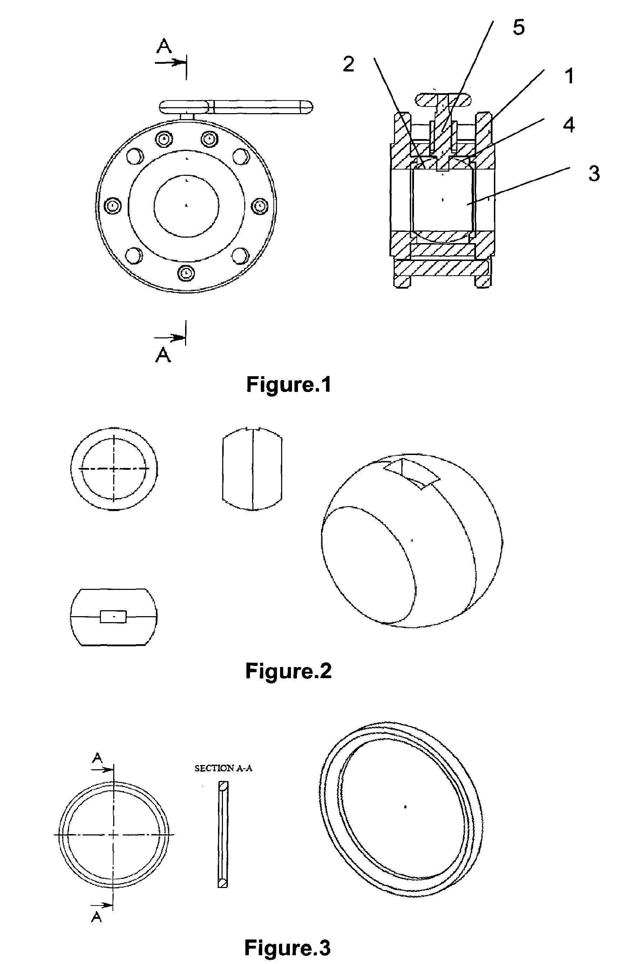

Figure 1 is the illustration of an embodiment of a spherical valve with a saddle and a regulating element made of stone casting.

Figure 2 shows the spherical regulating element.

Figure 3 shows the saddle of the spherical valve.

The embodiment of a spherical valve comprises a body 1 with input and output openings. Inside the body there is arranged a regulating spherical element 2 with a passing opening 3, which is capable of rotating in order to ensure the controlled overlapping and opening of the passing section.

Hermetic sealing is ensured through the saddle (4) having the ring form with a spherical surface, which matches the spherical surface of the regulating element 2. The regulating element 2 is controlled through the rod 5.

The control and opening/closing of the device is effected by turning the rod 5 till the achievement of full or partial matching or overlapping the section of the passing opening 3 with input and output section.

The manufacture of the regulating element and the saddle of stone casting in comparison with the known metal and ceramic analog devices allows to extend the period of operation and to provide safeness, solidness of the resistance of locking/regulating armature.

The use of the natural **raw material** or byproducts of the extractive industry allows to reduce the cost of locking/regulating apparatus.

## Claims

1. A regulating device for a pipeline armature, comprising a body with input and output sections, a saddle and a regulating element with mating surfaces for overlapping the passage section, said regulating element being capable of moving along the mating surfaces by means of a rod, which regulating device is **characterized in that** at least the regulating element is made of stone casting.

2. A regulating device of the pipeline armature comprising a body with input and output sections, a saddle and a regulating element with a drive and mating surfaces for overlaying the clear opening, which regulating device is **characterized in that** the saddle and the regulating element are made of stone casting.

3. The regulating device according to anyone of claims 1 or 2, **characterized in that** said stone casting is basalt casting.
